# EUROPÄISCHE PATENTSCHRIFT

(11) **EP 0 688 803 B1**
(45) Veröffentlichungstag und Bekanntmachung des Hinweises auf die Patenterteilung: **27.01.1999**
(21) Anmeldenummer: 95108893.9
(22) Anmeldetag: 09.06.1995
(51) Int. Cl.: C08G 18/80

(54) **Mischblockierte Isocyanatprepolymere, ein Verfahren zu ihrer Herstellung und ihre Verwendung zur Herstellung flexibilisierter Epoxidharz-Systeme**
Isocyanate prepolymers blocked with various blocking agents, preparation thereof and their use for the production of flexibilised epoxy resin systems
Prépolymères d'isocyanates bloqués par des agents de blocage différents, leur procédé de préparation et leur utilisation dans la production de systèmes de résines époxydes flexibilisées

(30) Priorität: 22.06.1994 DE 4421816
(43) Veröffentlichungstag der Anmeldung: 27.12.1995
(73) Patentinhaber: BAYER AG, 51368 Leverkusen (DE)
(72) Erfinder: Schmalstieg, Lutz, Dr., D-50676 Köln (DE); Rettig, Rainer, Dr., D-51515 Kürten (DE); König, Eberhard, Dr., D-51375 Leverkusen (DE)

(56) Entgegenhaltungen:
- EP-A- 0 402 579
- EP-A- 0 500 495
- US-A- 4 008 247
- US-A- 5 138 011

## Beschreibung

Die Erfindung betrifft neue Isocyanatprepolymere mit überwiegend oder ausschließlich blockierten Isocyanatgruppen, in denen mindestens 2 unterschiedliche Blockierungsmittel vorliegen, ein Verfahren zu ihrer Herstellung und ihre Verwendung zur Herstellung flexiblisierter Epoxidharz-Systeme.

Kunstharze auf Basis von Epoxidharzen zeichnen sich durch eine Anzahl positiver Eigenschaften aus, wie z. B. gute Haftfestigkeit auf organischen und anorganischen Substraten, gute Lösemittelbeständigkeit oder hohe Chemikalienfestigkeit. Infolge ihrer hohen Vernetzungsdichte sind jedoch amingehärtete Epoxidharze, vor allem solche auf Basis Diphenylolpropan (Bisphenol A) und Epichlorhydrin oftmals spröde mit Glasübergangsbereichen oberhalb 20°C. Auf allen Anwendungsgebieten, für die Schlag- und Stoßfestigkeit sowie eine hohe Flexibilität erforderlich sind, entsprechen diese Kunstharze daher im allgemeinen nicht allen Anforderungen der Praxis. Das gilt insbesondere für den Bausektor, wo es gilt, Schwundrisse in z. B. Beton dauerhaft zu überbrücken.

In gewissem Umfang ist durch Verringerung der Vernetzungsdichte eine interne und durch Weichmacherzusatz eine externe Erhöhung der Elastizität erzielbar.

Externe Elastifizierungsmittel wie z. B. Teer, Phthalsäureester, hochsiedende Alkohole oder Vinylpolymere sind nicht reaktiv und werden nicht in das Duromer-Netzwerk eingebaut. Sie bewirken durch Raumausfüllung nur eine Aufweitung.

Eine interne Elastifizierung durch Verringerung der Vernetzungsdichte läßt sich durch Reduzierung der Funktionalität des Härters erreichen. Die diesbezüglich mit Erfolg seit langem und in erheblichem Umfang gebräuchlichen langkettigen, niederfunktionellen Aminoamide auf Basis dimerisierter Fettsäuren sind aber aufgrund unzureichender Elastifizierung nicht auf allen Gebieten einsetzbar.

Eine gute und dauerhafte Elastifizierung der Epoxidharze läßt sich durch Kombination mit Polyurethanen erreichen. So wurden z. B. in der DE-AS 2 152 606 elastifizierte Kunststoffe aus Epoxidharzen, polyfunktionellen Carbamidsäurearylestern und Polyaminen beschrieben. Jedoch auch die so hergestellten Kunststoffe genügen nicht allen Anforderungen der Praxis: Zum einen weisen die beschriebenen Carbamidsäurearylester eine sehr hohe Viskosität auf, so daß sie vielfach mit Weichmacherzusatz verarbeitet werden müssen, zum anderen genügt das Niveau der mechanischen Eigenschaften nicht allen Anforderungen der Technik.

Dies gilt auch für die aus den EP-A 402579 und 500495 bekannten wärmehärtbaren Zusammensetzungen. Hier werden Härter beschrieben, bei denen zumindest eine Isocyanatgruppe mit hydroxylgruppenhaltigen Ketiminoverbindungen bzw. Pyrazolen umgesetzt wurde.

Es war daher die der Erfindung zugrundeliegende Aufgabe, blockierte, zur Flexibilisierung von Epoxidharz-Systemen geeignete Isocyanatprepolymere bereitzustellen, die nicht mit den Nachteilen der blockierten Polyisocyanatprepolymere des Standes der Technik behaftet sind.

Diese Aufgabe konnte mit der Bereitstellung der nachstehend näher beschriebenen blockierten Polyisocyanatprepolymere gelöst werden.

Gegenstand der Erfindung sind Isocyanatprepolymere auf Basis von aromatischen Diisocyanaten und Polyetheralkoholen einer (mittleren) Hydroxylfunktionalität von 1,5 bis 4, deren Isocyanatgruppen zu mindestens 95 % in mit Blockierungsmitteln blockierter Form vorliegen, und die einen Gehalt an freien und blockierten Isocyanatgruppen (berechnet als NCO) von insgesamt 1,3 bis 7 Gew.-% aufweisen, dadurch gekennzeichnet, daß sich die Blockierungsmittel zu
A) 50 bis 97 Äquivalent-% aus ggf. substituierten Phenolen, zu
B) 3 bis 50 Äquivalent-% aus ggf. substituierten Pyrazolen und zu
C) 0 bis 10 Äquivalent-% aus anderen, von A) und B) verschiedenen Blockierungsmitteln zusammensetzen,
wobei sich die genannten Prozentsätze auf die Gesamtheit der Blockierungsmittel beziehen und zu 100 ergänzen.

Gegenstand der Erfindung ist auch ein Verfahren zur Herstellung dieser Isocyanatprepolymeren durch Umsetzung von Isocyanatgruppen aufweisenden Prepolymeren mit einem NCO-Gehalt von 1,4 bis 8,5 Gew.-% auf Basis von Polyetheralkoholen einer (mittleren) Hydroxylfunktionalität von 1,5 bis 4 mit Blockierungsmitteln, die in einer Gesamtmenge von mindestens 95 Äquivalent-%, bezogen auf die Isocyanatgruppen des Isocyanatprepolymeren, zur Anwendung gelangen, dadurch gekennzeichnet, daß sich die Blockierungsmittel, bezogen auf die Gesamtmenge der Blockierungsmittel, zu
A) 50 bis 97 Äquivalent-% aus ggf. substituierten Phenolen, zu
B) 3 bis 50 Äquivalent-% aus ggf. substituierten Pyrazolen und zu
C) 0 bis 10 Äquivalent-% aus mindestens einem weiteren, von A) und B) verschiedenen Blockierungsmittel
zusammensetzen.

Gegenstand der Erfindung ist schließlich auch die Verwendung der erfindungsgemäßen Isocyanatprepolymeren zur Herstellung flexibilisierter Epoxidharz-Systeme.

Die Verwendung substituierter Pyrazole als Blockierungsmittel ist bereits aus der DE-0S 3 403 436 und der EP-A-0 159 117 bekannt. Beide Veröffentlichungen beschreiben Einkomponentensysteme, die erst durch Einwirkung von höheren Temperaturen zu polymeren Beschichtungen aushärten. Beiden Veröffentlichungen ist daher auch keinerlei Hinweis darauf zu entnehmen, daß bestimmte Pyrazolblockierte Polyisocyanate bereits bei Raumtemperatur mit Polyaminen vernetzbar sind. Darüberhinaus findet sich keinerlei Hinweis auf die mögliche Kombination von Pyrazolen mit phenolischen Blockierungsmitteln.

Bei den den erfindungsgemäßen blockierten Polyisocyanaten zugrundeliegenden Isocyanatprepolymeren handelt es sich um Urethangruppen aufweisende Umsetzungsprodukte mit einem NCO-Gehalt von 1,4 bis 8,5 Gew.-%, vorzugsweise 1,6 bis 5 Gew.-%, von aromatischen Polyisocyanaten der nachstehend beispielhaft genannten Art mit Polyetherpolyolen der ebenfalls nachstehend beispielhaft genannten Art.

Zur Herstellung der Umsetzungsprodukte geeignete Polyisocyanate sind beliebige aromatische Polyisocyanate, vorzugsweise Diisocyanate des Molekulargewichtsbereichs 174 bis 300 wie beispielsweise 2,4-Diisocyanatotoluol oder dessen technischen Gemische mit vorzugsweise bis zu 35 Gew.-%, bezogen auf Gemisch, an 2,6-Diisocyanatotoluol, 4,4'-Diisocyanatodiphenylmethan, dessen technischen Gemische mit 2,4'- und gegebenenfalls 2,2'-Diisocyanatodiphenylmethan und/oder mit seinen höheren Homologen. Diisocyanatotoluol ist besonders bevorzugt.

Bei den Polyetheralkoholen handelt es sich um solche des aus Hydroxylfunktionalität und Hydroxylgruppengehalt berechenbaren (mittleren) Molekulargewichts 800 bis 10 000, vorzugsweise 1 000 bis 6 000, einer (mittleren) Hydroxylfunktionalität von 1,5 bis 4, vorzugsweise 2 bis 4. Ihre Herstellung erfolgt in an sich bekannter Weise durch Alkoxylierung der entsprechenden Startermoleküle, vorzugsweise unter Verwendung von Ethylenoxid und/oder Propylenoxid in beliebiger Reihenfolge oder im Gemisch bei der Alkoxylierungsreaktion. Geeignete Startermoleküle sind den genannten Angaben bezüglich der Funktionalität entsprechende, niedermolekulare primäre oder sekundäre Amino- und/oder Hydroxylgruppen aufweisende Verbindungen wie beispielsweise Wasser, Ethanol, Ethylenglykol, Propylenglykol, Trimethylolpropan, Glycerin, Pentaerythrit, Sorbit, Ethylendiamin oder beliebige, den gemachten Angaben bezüglich der Funktionalität entsprechende Gemische derartiger Startermoleküle. Selbstverständlich können als Polyetheralkohole auch Gemische von vorab getrennt hergestellten Polyetheralkoholen eingesetzt werden, soweit die Gemische den gemachten Angaben bezüglich des mittleren Molekulargewichts und bezüglich der mittleren Funktionalität entsprechen.

Zur Herstellung Isocyanatprepolymeren werden die beispielhaft genannten Polyisocyanate mit den beispielhaft genannten Polyetheralkoholen unter Einhaltung eines NCO/OH-Äquivalentverhältnisses von 1,8:1 bis 10:1 unter Urethanbildung zur Reaktion gebracht. Die Umsetzung erfolgt im allgemeinen innerhalb des Temperaturbereiches von 40 bis 100 °C.

Art und Mengenverhältnisse der Ausgangskomponenten und das NCO/OH-Äquivalentverhältnis werden im Rahmen der gemachten Offenbarung im übrigen so gewählt, daß Isocyanatprepolymere mit dem bereits oben genannten NCO-Gehalt resultieren. Ein niederes NCO/OH-Verhältnis von beispielsweise 1,5:1 bis 2,5:1 kommt dann zur Anwendung, wenn eine Kettenverlängerungsreaktion erwünscht ist. Andernfalls kommt oftmals auch ein NCO-Überschuß, d.h. ein NCO/OH-Äquivalentverhältnis von 2,5:1 bis 10:1 zur Anwendung, worauf sich vorzugsweise eine destillative Entfernung des überschüssigen Ausgangsisocyanats, sofern es destillierbar ist, beispielsweise durch Dünnschichtdestillation anschließt. Im Falle der Verwendung bzw. Mitverwendung von nicht-destillierbaren Ausgangsisocyanaten kann deren Überschuß, gewünschtenfalls, auch durch Extraktion mit geeigneten Lösungsmitteln, wie beispielsweise Cyclohexan oder Isooctan entfernt werden.

Die erfindungsgemäß einzusetzenden Blockierungsmittel, die vorzugsweise in einer Gesamtmenge von mindestens 95, vorzugsweise 97 bis 100 Äquivalent-%, bezogen auf die NCO-Gruppen der Isocyanatprepolymeren, zum Einsatz gelangen, bestehen, bezogen auf die Gesamtmenge der Blockierungsmittel zu 50 bis 97 Äquivalent-%, vorzugsweise 60 bis 95 Äquivalent-% aus Blockierungsmittel A), 3 bis 50 Äquivalent-%, vorzugsweise 5 bis 40 Äquivalent-%, Blockierungsmittel B) und 0 bis 10, vorzugsweise 0 Äquivalent-% Blockierungsmittel C.

Als Blockierungsmittel A) sind prinzipiell alle Verbindungen, die eine phenolische OH-Gruppen tragen und, von dieser OH-Gruppe abgesehen, gegenüber Isocyanatgruppen inert sind, einsetzbar. Als Blockierungsmittel A) kommen insbesondere einwertige, C₁-C₁₈-, vorzugsweise C₆-C₁₂-alkylsubstituierte Phenole mit vorzugsweise einem Alkylsubstituenten oder Estergruppen aufweisende Phenole in Betracht. Konkrete Beispiele geeigneter Phenole sind Phenol, die isomeren Kresole, die isomeren Xylenole, 2-sek.-Butylphenol, 4-tert.-Butylphenol, die isomeren Nonylphenole, Dodecylphenole oder Octadecylphenole, die isomeren Hydroxybenzoesäurealkylester mit 1 bis 18, vorzugsweise 1 bis 4 Kohlenstoffatomen im Alkylrest oder beliebige Gemische von derartigen Phenolen. Die Verwendung von technischen Nonylphenol-Isomerengemischen (nachstehend "iso-Nonylphenol" genannt) ist besonders bevorzugt.

Als Blockierungsmittel B) werden ggf. substituierte Pyrazole eingesetzt. Dies sind z. B. Pyrazol, 3-(5)Methylpyrazol oder 3,5-Dimethylpyrazol. Die Verwendung von Pyrazol und 3,5-Dimethylpyrazol ist besonders bevorzugt.

Als gegebenenfalls weiterhin mitzuwendende Blockierungsmittel c) seien Butanonoxim, ε-Caprolactam sowie sekundäre Monoamine wie z.B. Di-n-butylamin beispielhaft genannt. Zur Durchführung des erfindungsgemäßen Verfahrens wird vorzugsweise zunächst das Blockierungsmittel A) mit den zu blockierenden NCO-Prepolymeren, vorzugsweise bei Temperaturen von 50 - 120°C, gegebenenfalls unter Mitverwendung von an sich bekannten Katalysatoren in bekannter Weise bis zum Erreichen des berechneten NCO-Gehalts umgesetzt. Anschließend wird das Blockierungsmittel B) im Temperaturbereich von 20 - 100°C, vorzugsweise 20 - 60°C portionsweise zugegeben. Prinzipiell möglich, jedoch weniger bevorzugt, wird zuerst das Blockierungsmittel B) mit dem NCO-Prepolymeren umsgesetzt und anschließend das Blockierungsmittel A) eingesetzt. Im Falle der Mitverwendung von weiteren Blockierungsmitteln C) können diese zu einem beliebigen Zeitpunkt, gegebenenfalls in Abmischung mit Blockierungsmittel A) bzw. B) zum Einsatz gelangen.

Der Vorteil der oben konkret beschriebenen Verfahrensweise (zuerst Blockierungsmittel A) dann Blockierungsmittel B)) entspricht dem grundsätzlich bevorzugten Prinzip, zuerst das weniger reaktive Blockierungsmittel abzureagieren, um anschließend die noch verbleibenden NCO-Gruppen mit dem höherreaktiven Blockierungsmittel umzusetzen. Hierdurch wird erreicht, daß trotz praktisch vollständiger Blockierung der Isocyanatgruppen kein Überschuß an Blockierungsmitteln eingesetzt werden muß.

Die Umsetzung erfolgt vorzugsweise in Substanz. Prinzipiell ist aber auch die Mitverwendung von organischen Lösungsmitteln oder Weichmachern möglich.

Geeignete Lösungsmittel sind z. B. n-Butylacetat, Methoxypropylacetat, Toluol, Xylol oder höhere aromatische Lösungsmittelgemische wie sie beispielsweise von der Firma Exxon-Chemie unter der Bezeichnung ®Solvesso vertrieben werden.

Bei den erfindungsgemäßen, überwiegend oder vollständig blockierten Isocyanatprepolymeren handelt es sich um solche mit den bereits oben genannten Kenndaten. Der Gesamtgehalt an unblockierten und blockierten aromatischen Isocyanatgruppen (berechnet als NCO) liegt vorzugsweise bei 1,5 bis 4 Gew-%. Die erfindungsgemäßen blockierten Polyisocyanatprepolymere besitzen überraschenderweise deutlich niedrigere Viskositäten als die entsprechenden ausschließlich Phenol-blockierten Produkte des Standes der Technik.

In Kombination mit organischen Polyaminen vernetzen die erfindungsgemäßen Produkte innerhalb eines Tages zu elastischen klebfreien Kunststoffen. Für diese Reaktion sind beliebige organische Polyamine des Molekulargewichtsbereichs 60 bis 1000, vorzugsweise 60 bis 500 geeignet, die insgesamt mindestens zwei primäre und/oder sekundäre Aminogruppen, vorzugsweise zwei primäre Aminogruppen pro Molekül, aufweisen. Geeignet sind beispielsweise Ethylendiamin, 1,2-Diaminopropan, 1,3-Diaminopropan, 1,4-Diaminobutan, 1,6-Diaminohexan, 2,2,4- und/oder 2,4,4-Trimethylhexamethylendiamin oder auch solche Polyamine, die neben mindestens zwei primären Aminogruppen noch sekundäre Aminogruppen aufweisen wie beispielsweise Diethylentriamin oder Triethylentetramin.

Für die Herstellung von Kunststoffen durch Umsetzung der erfindungsgemäßen Isocyanatprepolymeren mit Diaminen kommen vorzugsweise jedoch solche des genannten Molekulargewichtsbereichs zum Einsatz, die einen oder mehrere cycloaliphatische Ringe aufweisen. Hierzu gehören beispielsweise 1,4-Diaminocyclohexan, 4,4'-Diamino-dicyclohexylmethan, 1,3-Diaminocyclopentan, 4,4'-Diaminodicyclohexylpropan-2,2, 4-Isopropyl-1,2-diaminocyclohexan, 3,3'-Diamino-dicyclohexylpropan-2,2, 4-Isopropyl-1,2-diaminocyclohexan, 3,3'-Dimethyl-4,4'-diaminodicyclohexylmethan, 3-Aminomethyl-3,3,5-trimethylcyclohexylamin (Isophorondiamin) oder technisches Bis-aminomethyl-tricyclodecan, wie es unter der Bezeichnung "TCD-Diamin" von der Firma Hoechst AG vertrieben wird. Ebenfalls einsetzbar sind Aminopolyether des genannten Molekulargewichtsbereichs, die im statistischen Mittel pro Molekül 2 bis 3 endständig angeordnete primäre Aminogruppen aufweisen, wie sie beispielsweise von der Fa. Texaco unter dem Handelsnamen ®Jeffamin angeboten werden.

Die durch Vernetzung der erfindungsgemäßen Polyisocyanatprepolymere erhaltenen Kunststoffe zeigen ein besseres mechanisches Werteniveau als die ausschließlich Phenol-blockierten vergleichbaren Systeme des Standes der Technik.

In der Praxis werden die erfindungsgemäßen, blockierten Polyisocyanatprepolymere zumeist als Dreikomponentensystem bestehend aus Epoxydharzen, Polyaminen und den blockierten Polyisocyanatprepolymeren eingesetzt. Derartige Mischungen sind heiß und kalt härtbar. Geeignete Epoxidharze enthalten im Durchschnitt mehr als eine Epoxidgruppe pro Molekül und können Glycidylether von mehrwertigen Alkoholen wie z. B. Butandiol, Hexandiol, Glycerin, hydriertes Diphenylolpropan oder mehrwertigen Phenolen wie z. B. Resorcin, Diphenylolpropan oder Phenol-Aldehyd-Kondensaten sein. Es können auch die Glycidylether mehrwertiger Carbonsäuren, wie Hexahydrophthalsäure oder dimerisierte Fettsäure verwendet werden.

Besonders bevorzugt ist der Einsatz von flüssigen Epoxidharzen auf Basis von Epichlorhydrin und Diphenylolpropan-2.2 (Bisphenol A) mit einem Molekulargewicht von 340 bis 450. Gewünschtenfalls kann mit monofunktionellen Epoxidverbindungen die Viskosität der Mischungen gesenkt und dadurch die Verarbeitungszeit verbessert werden. Beispiele hierfür sind aliphatische und aromatische Glycidylether, wie Butylglycidylether, Phenylglycidylether oder Glycidylester wie Glycidylacrylat oder Epoxide wie Styroloxid oder 1,2-Epoxydodecan.

In derartigen, erfindungsgemäße, blockierte Isocyanatprepolymere, Epoxidharze und Polyamine, insbesondere cycloaliphatische Polyamine der vorstehend beispielhaft genannten Art enthaltenden, zu hochwertigen Kunststoffen aushärtbaren "Epoxidharz-Systemen" liegen im allgemeinen pro Epoxidgruppe 0,4 bis 0,9, vorzugsweise 0,5 bis 0,8 primäre Aminogruppen und 0,02 bis 0,5, vorzugsweise 0,03 bis 0,4 blockierte Isocyanatgruppen vor.

Zur Herstellung von gebrauchsfertigen Mischungen können derartigen Kombinationen aus Epoxidharzen, Polyamin und erfindungsgemäßen blockierten Polyisocyanatprepolymeren die üblichen Hilfs- und Zusatzmittel wie beispielsweise Füllstoffe, Pigmente, Reaktionsbeschleuniger oder Viskositätsregulatoren einverleibt werden. Beispielhaft genannt seien Reaktionsbeschleuniger wie Salicylsäure, Bis(dimethylaminomethyl)-phenol oder Tris-(dimethylaminomethyl)-phenol, Füllstoffe wie Sande, Gesteinsmehl, Kieselsäure, Asbestmehl, Kaolin, Talkum, Metallpulver, Teer, Teerpech, Asphalte, Korkschrote, Polyamide, Weichmacher wie beispielsweise Phthalsäureester oder andere Viskositätsregulatoren wie beispielsweise Benzylalkohol. Epoxidharz-Härter-Kombinationen, in denen als Härter die erfindungsgemäßen, blockierten Isocyanatprepolymeren eingesetzt bzw. mitverwendet werden, eignen sich zur Herstellung von Überzügen, Klebstoffen, Dichtungsmassen oder Formteilen auf allen Anwendungsgebieten, wo gute Haftung, Chemikalienbeständigkeit, sowie hohe Schlag- und Stoßfestigkeit, verbunden mit verbesserter Flexibilität und Elastizität, gefordert werden.

Die nachfolgenden Beispiele dienen zur näheren Erläuterung der Erfindung. Alle Prozentangaben und alle Angaben und bezüglich des PO/EO-Verhältnisses beziehen sich auf das Gewicht.

### Beispiel 1

1000 g eines Polyethertriols der OH-Zahl 28, hergestellt durch Propoxylierung von Trimethylolpropan und anschließende Ethoxylierung des Propoxylierungsproduktes (PO/EO-Verhältnis = 83:17) und 500 g eines Polyetherdiols der OH-Zahl 56, hergestellt durch Propoxylierung von Propylenglykol werden mit 174 g 2,4-Diisocyanatotoluol 5 Stunden bei 80°C prepolymerisiert bis der theoretische NCO-Gehalt von 2,5 % erreicht ist.

Anschließend setzt man 154 g eines technischen Gemisches isomerer Nonylphenole (iso-Nonylphenol) zu, katalysiert mit 0,4 Zinn(II)octoat und rührt 6 Stunden bei 60°C. Danach gibt man 20 g festes Pyrazol zu und rührt 30 Minuten bei 60°C nach. Insgesamt kommen auf diese Weise 99 Äquivalent-% Blockierungsmittel, bezogen auf die Isocyanatgruppen des Prepolymeren, zum Einsatz. Das so erhaltene blockierte Isocyanatprepolymer besitzt folgende Kenndaten:

| | |
|---|---|
| blockierter NCO-Gehalt | 2,25 % (berechnet) |
| Viskosität (22 °C) | 49000 mPas |

187 g des Prepolymers werden mit 11,9 g 3,3'-Dimethyl-4,4'-diaminodicyclohexylmethan innig verrührt. Die Mischung härtet über Nacht bei Umgebungstemperatur zu einem klaren, elastischen Kunststoff mit folgenden mechanischen Eigenschaften:

| | |
|---|---|
| Shore A-Härte | 65 |
| Reißdehnung | 1050 % |
| Reißfestigkeit | 4,7 N/mm² |
| Weiterreißwiderstand | 17 N/mm |

### Beispiel 2

1000 g des Polyethertriols aus Beispiel 1 und 1000 g eines Polyetherdiols der OH-Zahl 28, hergestellt durch Propoxylierung von Propylenglykol und anschließende Ethoxylierung des Propoxylierungsproduktes (PO/EO-Verhältnis 80:20) werden mit 174 g 2,4-Diisocyanatotoluol 5 Stunden bei 80°C prepolymerisiert bis der theoretische NCO-Gehalt von 1,9 % erreicht ist. Anschließend setzt man 176 g iso-Nonylphenol zu, katalysiert mit 0,5 g Zinn(II)octoat und rührt 6 Stunden bei 60°C. Danach führt man 19 g festes 3,5-Dimethylpyrazol zu und rührt 30 Minuten bei 60°C nach. Insgesamt kommen auf diese Weise 100 Äquivalent-% Blockierungsmittel, bezogen auf die Isocyanatgruppen des Prepolymeren, zum Einsatz. Das so erhaltene blockierte Isocyanatprepolymer besitzt folgende Kenndaten:

| | |
|---|---|
| blockierter NCO-Gehalt | 1,7 % (berechnet) |
| Viskosität (22 °C) | 39000 mPas |

247 g des Prepolymers werden mit 11,9 g 3,3'-Dimethyl-4,4'-diaminodicyclohexylmethan innig verrührt. Die Mischung härtet über Nacht bei Umgebungstemperatur zu einem klaren, elastischen Kunststoff mit folgenden mechanischen Eigenschaften:

| | |
|---|---|
| Shore A-Härte | 61 |
| Reißdehnung | 1500 % |
| Reißfestigkeit | 3,9 N/mm² |
| Weiterreißwiderstand | 20 N/mm |

### Beispiel 3

1000 g des Polyetherdiols aus Beispiel 2 und 800 g eines Polyethertriols der OH-Zahl 35, hergestellt durch Propoxylierung von Trimethylolpropan und anschließende Ethoxylierung des Propoxylierungsproduktes (PO/EO-Verhältnis 87:13) werden mit 174 g 2,4-Diisocyanatotoluol 5 Stunden bei 80°C prepolymerisiert bis der theoretische NCO-Gehalt von 2,1 % erreicht ist. Anschließend setzt man 176 g iso-Nonylphenol zu, katalysiert mit 0,4 g Zinn(II)octoat und rührt 6 Stunden bei 60°C nach. Danach gibt man 13 g festes Pyrazol zu und rührt 30 Minuten bei 60°C nach. Insgesamt kommen auf diese Weise 99 Äquivalent-% Blockierungsmittel, bezogen auf die Isocyanatgruppen des Prepolymeren, zum Einsatz. Das so erhaltene blockierte Isocyanatprepolymer besitzt folgende Kenndaten:

| | |
|---|---|
| blockierter NCO-Gehalt | 1,9 % |
| Viskosität (22 °C) | 61000 mPas |

221 g des Prepolymers werden mit 11,9 g 3,3'-Dimethyl-4,4'-diaminodicyclohexylmethan innig verrührt. Die Mischung härtet über Nacht bei Umgebungstemperatur zu einem transparenten elastischen Kunststoff mit folgenden mechanischen Eigenschaften:

| | |
|---|---|
| Shore A-Härte | 54 |
| Reißdehnung | 1050 % |
| Reißfestigkeit | 2,8 N/mm² |
| Weiterreißwiderstand | 18 N/mm |

### Beispiel 4 (nicht erfindungsgemäß)

Das in Beispiel 1 beschriebene NCO-Prepolymer wird ausschließlich mit iso-Nonylphenol blockiert: 1674 g des NCO-Prepolymers werden mit 248 g iso-Nonylphenol unter Zusatz von 0,4 g Zinn(II)octoat 7 h bei 60°C gerührt (113 Äquivalent-% Blockierungsmittel, bezogen auf Isocyanatgruppen).

Das so erhaltene blockierte Isocyanatprepolymer besitzt folgende Kenndaten:

| | |
|---|---|
| blockierter NCO-Gehalt | 2,2 % |
| Viskosität (22 °C) | 78000 mPas |

193 g des Prepolymers wurden mit 11,9 g 3,3'-Dimethyl-4,4'-diaminodicyclohexylmethan innig verrührt. Die Mischung härtet über Nach bei Umgebungstemperatur zu einem klaren, elastischen Kunststoff mit folgenden mechanischen Eigenschaften:

| | |
|---|---|
| Shore A-Härte | 63 |
| Reißdehnung | 190 % |
| Reißfestigkeit | 3,4 N/mm² |
| Weiterreißwiderstand | 14 N/mm |

### Beispiel 5

### Herstellung eines elastifizierten Epoxidharzes

100 g des blockierten Prepolymers aus Beispiel 1 und 100 g eines handelsüblichen Epoxidharzes aus Bisphenol A und Epichlorhydrin vom mittleren Molekulargewicht 380 werden mit 37,5 g 3,3'-Dimethyl-4,4'-diaminodicyclohexylmethan innig verrührt. Die Mischung härtet über Nacht zu einem schlagzähen Kunststoff mit einer Shore D-Härte von 70.

## Patentansprüche

1. Isocyanatprepolymere auf Basis von aromatischen Diisocyanaten und Polyetheralkoholen einer (mittleren) Hydroxylfunkionalität von 1,5 bis 4, deren Isocyanatgruppen zu mindestens 95 % in mit Blockierungsmitteln blockierter Form vorliegen, und die einen Gehalt an freien und blockierten Isocyanatgruppen (berechnet als NCO) von insgesamt 1,3 bis 7 Gew.-% aufweisen, dadurch gekennzeichnet, daß sich die Blockierungsmittel zu
A) 50 bis 97 Äquivalent-% aus ggf. substituierten Phenolen, zu
B) 3 bis 50 Äquivalent-% aus ggf. substituierten Pyrazolen und zu
C) 0 bis 10 Äquivalent-% aus anderen, von A) und B) verschiedenen Blockierungsmitteln zusammensetzen,
wobei sich die genannten Prozentsätze auf die Gesamtheit der Blockierungsmittel beziehen und zu 100 ergänzen.

2. Isocyanatprepolymere gemäß Anspruch 1, dadurch gekennzeichnet, daß sich die Blockierungsmittel zu
A) 50 bis 97 Äquivalent-% aus iso-Nonylphenol und zu
B) 3 bis 50 Äquivalent-% aus Pyrazol und/oder 3,5-Dimethylpyrazol zusammensetzen.

3. Isocyanatprepolymere gemäß Anspruch 1 und 2, dadurch gekennzeichnet, daß sich die Blockierungsmittel zu
A) 60 bis 95 Äquivalent-% aus iso-Nonylphenol und zu
B) 5 bis 40 Äquivalent-% aus Pyrazol und/oder 3,5-Dimethylpyrazol zusammensetzen.

4. Verfahren zur Herstellung von Isocyanatprepolymeren gemäß Anspruch 1 durch Umsetzung von Isocyanatgruppen aufweisenden Prepolymeren mit einem NCO-Gehalt von 1,4 bis 8,5 Gew.-% auf Basis von Polyetheralkoholen einer (mittleren) Hydroxylfunktionalität von 1,5 bis 4 mit Blockierungsmitteln, die in einer Gesamtmenge von mindestens 95 Äquivalent-%, bezogen auf die Isocyanatgruppen des Isocyanatprepolymeren, zur Anwendung gelangen, dadurch gekennzeichnet, daß sich die Blockierungsmittel, bezogen auf die Gesamtmenge der Blockierungsmittel, zu
A) 50 bis 97 Äquivalent-% aus ggf. substituierten Phenolen, zu
B) 3 bis 50 Äquivalent-% aus ggf. substituierten Pyrazolen und zu
C) 0 bis 10 Äquivalent-% aus mindestens einem weiteren, von A) und B) verschiedenen Blockierungsmittel
zusammensetzen.

5. Verwendung der Isocyanatprepolymeren mit zu mindestens 95 % blockierten Isocyanatgruppen gemäß Anspruch 1 bis 3 zur Herstellung flexibilisierter Epoxidharz-Systeme.

6. Verwendung gemäß Anspruch 5 in Epoxidharz-Systemen, die neben den Epoxidharzen organische Polyamine des Molekulargewichtsbereichs 60 bis 1 000 mit mindestens zwei primären und/oder sekundären Aminogruppen pro Molekül enthalten.

## Claims

1. Isocyanate prepolymers based on aromatic diisocyanates and polyether alcohols having an (average) hydroxyl functionality of from 1.5 to 4, the isocyanate groups whereof exist to the extent of at least 95% in a form blocked by blocking agents, and which have a content of free and blocked isocyanate groups (calculated as NCO) of from 1.3 to 7 wt.% in total, characterised in that the blocking agents consist of
A) from 50 to 97 equivalent-% of optionally substituted phenols,
B) from 3 to 50% equivalent-% of optionally substituted pyrazoles, and
C) from 0 to 10 equivalent-% of other blocking agents, different from A) and B),
the said percentages referring to the blocking agents as a whole and totalling 100.

2. Isocyanate prepolymers according to claim 1, characterised in that the blocking agents consist of
A) from 50 to 97 equivalent-% of isononylphenol and
B) from 3 to 50 equivalent-% of pyrazole and/or 3,5-dimethylpyrazole.

3. Isocyanate prepolymers according to claim 1 and 2, characterised in that the blocking agents consist of
A) from 60 to 95 equivalent-% of isononylphenol and
B) from 5 to 40 equivalent-% of pyrazole and/or 3,5-dimethylpyrazole.

4. Method for the preparation of isocyanate prepolymers according to claim 1 by reacting prepolymers which contain isocyanate groups and have an NCO content of from 1.4 to 8.5 wt.% and are based on polyether alcohols having an (average) hydroxyl functionality of from 1.5 to 4, with blocking agents, which are employed in a total quantity of at least 95 equivalent-%, referred to the isocyanate groups of the isocyanate prepolymer, characterised in that the blocking agents consist of
A) from 50 to 97 equivalent-% of optionally substituted phenols,
B) from 3 to 50 equivalent-% of optionally substituted pyrazoles, and
C) from 0 to 10 equivalent-% of other blocking agents different from A) and B),
referred to the total quantity of the blocking agents.

5. Use of the isocyanate prepolymers having isocyanate groups blocked to the extent of at least 95% according to claims 1 to 3 for the production of flexibilised epoxy resin systems.

6. Use according to claim 5 in epoxy resin systems which contain, in addition to the epoxy resins, organic polyamines in the molecular weight range of from 60 to 1000 and having at least two primary and/or secondary amino groups per molecule.

## Revendications

1. Prépolymère d'isocyanates, à base de diisocyanates aromatiques et de polyétheralcools ayant une fonctionnalité hydroxyle (moyenne) comprise dans l'intervalle allant de 1,5 à 4, dont les radicaux isocyanates sont présents à au moins 95% sous forme bloquée avec des agents de blocage et qui présente une teneur en radicaux isocyanate libres et bloqués (calculés comme NCO) de, au total, 1,3 à 7% en poids, caractérisé en ce que l'agent de blocage se compose de :
a) 50 à 97% en équivalents de phénols facultativement substitués ;
b) 3 à 50% en équivalents de pyrazoles facultativement substitués, et
c) 0 à 10% en équivalents d'autres agents de blocage, différents de a) et de b),
où les pourcentages cités se rapportent à la totalité des agents de blocage et se complètent pour faire 100.

2. Prépolymère d'isocyanates suivant la revendication 1, caractérisé en ce que l'agent de blocage se compose de :
a) 50 à 97% en équivalents d'iso-nonylphénol et
b) 3 à 50% en équivalents de pyrazole et/ou de 3,5-diméthylpyrazole.

3. Prépolymère d'isocyanates suivant les revendications 1 et 2, caractérisé en ce que l'agent de blocage se compose de :
a) 60 à 95% en équivalents d'iso-nonylphénol et
b) 5 à 40% en équivalents de pyrazole et/ou de 3,5-diméthylpyrazole.

4. Procédé de préparation du prépolymère d'isocyanates suivant la revendication 1, par réaction de prépolymères présentant des radicaux isocyanate, avec une teneur en NCO de 1,4 à 8,5% en poids, à base de polyétheralcools ayant une fonctionnalité hydroxyle (moyenne) comprise dans l'intervalle allant de 1,5 à 4, avec des agents de blocage, qui sont utilisés en une quantité totale d'au moins 95% en équivalents, sur base des radicaux isocyanate du prépolymère d'isocyanates, caractérisé en ce que l'agent de blocage, sur base de la quantité totale d'agent de blocage, se compose de :
a) 50 à 97% en équivalents de phénols facultativement substitués ;
b) 3 à 50% en équivalents de pyrazoles facultativement substitués, et
c) 0 à 10% en équivalents d'autres agents de blocage, différents de a) et de b).

5. Utilisation des prépolymères d'isocyanates avec au moins 95% de radicaux isocyanate bloqués, suivant les revendications 1 à 3, dans la préparation de systèmes de résines époxydes flexibilisées.

6. Utilisation suivant la revendication 5, dans des systèmes de résines époxydes, qui contiennent, en plus des résines époxydes, des polyamines organiques de poids moléculaire compris dans l'intervalle allant de 60 à 1000, avec au moins deux radicaux amino primaire et/ou secondaire par molécule.
